(19) Europäisches Patentamt

European Patent Office

Office européen des brevets

(11) Veröffentlichungsnummer: **0 189 570**
**B1**

(12) **EUROPÄISCHE PATENTSCHRIFT**

(45) Veröffentlichungstag der Patentschrift: **02.05.90**

(21) Anmeldenummer: **85115774.3**

(22) Anmeldetag: **11.12.85**

(51) Int. Cl.⁵: **E 04 C 3/18, E 04 B 1/26**

(54) Beschlag.

(30) Priorität: **24.01.85 DE 3502234**

(43) Veröffentlichungstag der Anmeldung:
**06.08.86 Patentblatt 86/32**

(45) Bekanntmachung des Hinweises auf die
Patenterteilung:
**02.05.90 Patentblatt 90/18**

(84) Benannte Vertragsstaaten:
**AT BE CH FR GB LI NL SE**

(56) Entgegenhaltungen:
**DE-A-3 130 445**
**GB-A-2 097 035**
**NL-A-6 503 770**

**"PROGRESSIVE ARCHITECTURE", OKT. 1969, S. 250**

(73) Patentinhaber: **BULLDOG Beratungs- und Vertriebs-GmbH**
**Boschstrasse 9**
**D-2808 Syke 1 (DE)**

(72) Erfinder: **Wilhelmi, Jürgen**
**Hermann-Löns-Weg 6**
**D-2808 Syke-Wachendorf (DE)**

(74) Vertreter: **Hoormann, Walter, Dr.-Ing. et al**
**FORRESTER & BOEHMERT Widenmayerstrasse 4/I**
**D-8000 München 22 (DE)**

Courier Press, Leamington Spa, England.

## Beschreibung

Die Erfindung betrifft einen Beschlag zum stirnseitigen, insbesondere oberkantenbündigen, querkraftbelastbaren Anschluß eines Holzbalkens, bspw. eines Dachbalkens oder einer Dachpfette, an eine quer zu dem Holzbalken verlaufende — insbesondere ebenfalls aus Holz bestehende — Tragkonstruktion, bspw. einen Hauptträger oder Binder, wobei ein Steg des Beschlages mit seiner einen Anlagefläche an der Stirnseite des Holzbalkens in Anlage zu bringen ist und von der Anlagefläche wenigstens ein Schenkel senkrecht zu der mit der Längsrichtung des Steges übereinstrimmenden (Querkraft-) Kraftrichtung vorsteht, der mit dem Holzbalken verbunden ist, und dessen dem Stag abgekehrter freier Endabschnitt durch wengistens ein im wesentlichen senkrecht zum Schenkel verlaufendes Befestigungsmittel mit dem Holzbalken zu verbinden, jedoch derart ausgebildet ist, daß mit ihm praktisch keine Querkräfte, sondern lediglich Zugkräfte, zu übertragen sind, wobei der Schenkel mit Abstand zum Steg eine Schwächung aufweist.

Ein Beschlag der vorstehend beschriebenen Gattung ist aus der DE—PS 31 30 445 bekannt. Bei diesem vorbekannten Beschlag erfolgt die im wesenlichen querkraftübertragungsfreie Ausbildung des dem Steg abgekehrten freien Endabschnittes des Schenkels derart, daß die Dicke des Schenkels im Bereich des freien Endabschnittes (erheblich) dünner ausgebildet ist als in demjenigen Abschnitt des Schenkels, der dem Steg unmittelbar benachbart ist.

Die DE—PS 31 30 445 offenbart darüber hinaus zwar noch andere Ausgestaltungsbeispiele für einen derartigen Beschlag (bei denen nämlich der (die) Schenkel bis zum freien Ende hin durchgehend mit gleicher Dicke ausgebildet ist (sind), und wobei dann mithin für die Aufnahme und Übertragung von Zugkräften wenigstens eine von dem (den) Schenkel(n) gesondert ausgebildet und örtlich getrennt angeordnete, zu dem (den) Schenkel(n) parallele dünne Metallasche vorgesehen ist, die mit dem Holzbalken zu verbinden bzw. in diesem zu verankern ist), doch unterfallen diese weiteren Ausgestaltungsvorschläge der DE—PS 31 30 445 nicht der hier in Rede stehenden Gattung von Beschlägen, welche zwischenzeitlich auch bereits erfolgreich auf dem Markt Eingang gefunden hat.

Die DE—PS 31 30 445 geht ihrerseits von einem Stand der Technik aus, wie er aus der US—Z "Progressive Architecture", October 1969, S. 250, bekanntgeworden ist, nämlich von einem Beschlag, dessen im eingebauten Zustand im allgemeinen senkrecht verlaufender Steg — wie bei dem gattungsgemäßen Beschlag — mit seiner einen Anlagefläche an der Stirnseite des anzuschließenden Holzbalkens anliegt, wobei sowohl am oberen als auch am unteren Ende des Beschlages bzw. dessen Steges jeweils ein zum Steg senkrecht und damit horizontaler, gelochter bzw. zu lochender Schenkel vorsteht, der mit Bolzen, Schrauben o.a., an einem dem Holzbalken zugeordneten, im Rahmen der obigen Gattungsbeschreibung mit Tragkonstruktion bezeichneten Bauteil zu befestigen ist, wobei bei jener seinerzeit bereits vorbekannten Beschlagausbildung der Holzbalken zwischen die beiden horizontalen Schenkel bis an die Anlagefläche des Steges herangeschoben und mittels Schrauben, Bolzen, Stiften o.ä., verankert wird, welche sich jeweils durch Löcher in den horizontalen Schenkeln erstrecken.

Zu jenem bereits seinerzeit vorbekannten Stand der Technik führt dfie DE—PS 31 30 445 zutreffend als Nachteil aus, daß bei ihm sowohl die vor- und nachstehend auch als Querkräft bezichneten, senkrechten Auflagerkräfte als auch die aus der zwangsläufig exzentrischen Krafteinleitung resultierenden, quer zu den Auflager- bzw. Querkräften resultierenden Zugkräfte über die (horizontalen) Schenkel abgetragen werden, welche — was in der DE—PS 31 30 445 als außerordentlich nachteilig angesehen wird — über ihre gesamte Länge eine durch die nach der Montage entstehenden Auflagerkräfte (= Querkräfte) vorgegebene konstante Dicke aufweisen.

Die DE—PS 31 30 445 sieht den seinerzeit vorbekannten Beschlag mit seinen über ihre gesamte Länge gleich starken Schenkeln u.a. und insbesondere auch deswegen als nachteilig an, weil die Schenkel über ihre gesamte Länge die durch die erwarteten Querkräfte (= Auflagerkräfte) bestimmte gleiche Stärke aufweisen, was nach Auffassung der DE—PS 31 30 445 unnötiges Material für den Beschlag erfordere und sein Gewicht unnötig erhöhe, da die Schenkel für eine Aufnahme von Verankerungsschrauben o.dgl. wesentlich länger ausgebildet werden müßten, als dieses zur Aufnahme der Auflagerkräfte (= Querkräfte) tatsächlich erforderlich sei. Dadurch werde — so die DE—PS 31 30 445 in Sp. 2, Z. 22 ff. — der Auflagerdruckpunkt weiter als nötig von der Anlagefläche des Steges entfernt, was wiederum eine weitere (also zusätzliche) Verstärkung (über die durch die Auflagerkräfte vorgegebene Dimensionierung hinaus) der Schenkel und ihrer Einspannung in den Steg erforderlich mache. Nach Auffassung der DE—PS 31 30 445 bekämen die horizontalen Schenkel damit eine solche Stärke, daß sie nur noch mit reinen Metallwerkzeugen bearbeitet werden könnten.

Demgemäß sieht es die DE—PS 31 30 445 — ausgehend vondem Stand der Technik gemäß der US—Z "Progressive Architecture" — als Aufgabe an, einen hochbelastbaren und feuerbeständigen Beschlag zum querkraftbelastbaren Anschluß an die Stirnseite von Holzbalken zu schaffen, dem die vorstehend erwähnten vermeintlichen Nachteile nicht anhaften, und der insbesondere einfach herstellbar und mit einfachen Mitteln an der Balkenstirnseite zu befestigen sei, was, wie ausgeführt, durch den Vorschlag der DE—PS 31 30 445 durch mindestens eine zu den Schenkeln parallele dünne Metallasche gelöst worden ist, die im Holzbalken zu verankern ist.

Wenngleich nicht in Abrede gestellt wird, daß mit der DE—PS 31 30 445 ein gattungsgemäßer Beschlag geschaffen worden ist, der sich genüber den seinerzeit vorbekannten Beschlägen in vorteilhafter Weise auszeichnet und demgemäß auch entsprechende Resonanz im Markt gefunden hat, ist nicht zu übersehen, daß die Ausführungen der DE—PS 31 30 445 zu dem seinerzeit vorbekannten Stand der Technik gemäß US—Z "Progressive Architecture" und damit insbesondere bzgl. eines Holzbalken-Anschluß-Beschlages mit Schenkeln konstanter Dicke auf Trugschlüssen bzw. fachlichen Vorurteilen beruhen, wenn man in die entsprechende Ausgestaltungsbeurteilung nicht allein Überlegungen zum Stand der Technik gemäß der US—Z "Progressive Architecture" einfließen läßt, sondern darüber hinaus u.a. Überlegungen, die gerade der DE—PS 31 30 445 zugrundeliegen, jedoch von der einschlägigen Fachwelt bisher nicht erkannt bzw. falsch beurteilt worden sind.

Hierzu wird — gleichsam als Ausgangsüberlegung — zunächst einmal darauf hingewiesen, daß es bekanntlich grundsätzlich, und damit regelmäßig, stets (erheblich) einfacher ist, irgendwelche Profile mit (zumindest weitgehend) gleicher Dicke der einzelnen Abschnitte herzustellen, als Profile, die Abschnitte (insbesondere erheblich) unterschiedlicher Dicke aufweisen. Dieses gilt nicht nur für Gußverfahren, sondern auch beispielsweise Strangpreßverfahren und — wenngleich aus völlig anderen Gesichtspunkten — insbesondere bekanntlich auch dann, wenn ausgehend von größeren Wandstärken — bestimmte Abschnitte durch spanabhebende Bearbeitung zu Abschnitten geringerer Wandstärke umzuarbeiten sind.

Unter Berücksichtigung dieser Überlegungen wäre es daher fertigungstechnisch an sich besser (da erheblich kostensparender), entsprechende Bauteile — und damit auch die in Rede stehenden Beschläge — so auszubilden bzw. so ausbilden zu können, daß die einzelnen Abschnitte eines Beschlages im wesentlichen gleiche Wandstärke aufweisen. Der in der DE—PS 31 30 445 u.a. angeführte Gesichtspunkt an sich unnötiger Materialkosten trifft zwar qualitativ zu, doch tritt er bekanntlich quantitativ gegenüber den Fertigungskosten ganz erheblich zurück. Weiterhin sind die Bearbeitungskosten für die Einschnitte von zwei verschieden breiten Schlitzen höher als der Aufwand, den ein einheitlich breiter Schlitz verursacht; zumal dann auch mit den heute verfügbaren Schlitzfräsen der verdeckte Einbau möglich ist, ohne daß nachträglich Schlitzöffnungen ausgeleimt werden müssen.

Nun ist dem Autor der DE—PS 31 30 445 andererseits aber darin zuzustimmen, daß Beschläge gemäß der US—Z "Progressive Architecture", also derartige Beschläge mit Schenkeln konstanter Dicke, in der Tat nicht optimal sind, zumal sich die in der DE—PS 31 30 445 erwähnte Verlagerung des Auflagerdruckpunktes gleichsam in der Art einer "Rückkopplung" in einer zusätzlich erforderlichen Verstärkung der Schenkeldicke niederschlägt . . ., wenn man die Beschläge gemäß der US—Z "Progressive Architecture" ausbildet.

Ein Beschlag der vorstehend beschriebenen Gattung ist weiterhin durch die Zeitschrift "Holz als Roh- under Werkstoff", Heft 8, 1983, S. 347—349 bekannt. Bei diesem bekannten Beschlag erfolgt die im wesentlichen querkraftübertragungsfreie Ausbildung des dem Steg abgekehrten freien Endabschnittes des Schenkels derart, daß die Dicke des Schenkels im Bereich des freien Endabschnittes erheblich dünner ausgebildet ist als in demjenigen Abschnitt des Schenkels, der dem Steg unmittelbar benachbart ist.

Die Herstellung derartiger Profile, bei denen die Abschnitte eine erheblich unterschiedliche Dicke aufweisen, bereitet jedoch Schwierigkeiten. Dieses gild nicht nur für Gußverfahren, sondern auch bspw. für Strangpreßverfahren und insbesondere bekanntlich auch dann, wenn ausgehend von größeren Wandstärken, bestimmte Abschnitte durch spanabhebende Bearbeitung zu Abschnitten geringer Wandstärke umzuarbeiten sind.

Weiterhin sind die Bearbeitungskosten für die Einschnitte von zwei verschieden breiten Schlitzen höher als der Aufwand, den ein einheitlich breiter Schlitz verursacht.

Der vorliegenden Erfindung liegt die Aufgabe zugrunde, den Beschlag der eingangs beschriebenen Gattung so zu verbessern, daß er zunächst einmal mit optimal geringen Fertigungskosten zu fertigen ist, wobei die in der DE—PS 31 30 445 erwähnten, oben zitierten Nachteile aber dennoch vermieden werden sollen und ein neuer Beschlag geschaffen werden soll, der insbesondere für eine hohe Festigkeitsklasse geeignet ist, wobei bzgl. des neuen Beschlages zudem relativ geringe Abmessungen und ein erhöhter Brandschutz angestrebt wird, und der neue Beschlag trotz angestrebter relativ geringer Dimensionen insbesondere auch für relativ schwere Holzbaken, wie bspw. Holzleimbalken größerer Dimension, geeignet sein soll.

Die Lösung dieser Aufgabe ist erfindungsgemäß dadurch gekennzeichnet, daß die in Richtung des Steges gemessene Dicke des Schenkels konstant und die Schwächung als relativ dünner bzw. schmaler, schlitzförmiger Einschnitt ausgebildet ist, wobei die als schmaler, sclitzförmiger Einschnitt ausgebildet Schwächung gleichsam als "Gelenk" zwischen den beiden Abschnitten des Schenkels wirkt und demgemäß bewirkt, daß (lediglich) der dem Steg unmittelbar benachbarte Abschnitt des Schenkels in der Lage ist, Querkräfte (und dementsprechend auch Momente) zu übertragen, während der jenseits der Schwächungsstelle liegende freie Endabschnitt des Schenkels hierzu nicht in der Lage ist, sondern (im wesentlichen lediglich) Zugkräfte aufnimmt und überträgt, die rechtwinklig zu den Querkräften, und damit zur Auflagerlast, verlaufen.

Die erfindungsgemäße Schwächung des über seine gesamte Länge zumindest im wesentlichen gleichstarken Schenkels erstreckt sich bevorzugt über die gesamte Breite des Schenkels. Sie verläuft sinnvoller- und demgemäß zweckmäßigerweise bevorzugt von der Oberseite zur Unterseite des Schenkels hin.

Eine erfindungsgemäß ausgebildete Schwächung kann schon aufgrund des relativ geringen abzutragenden Spanvolumens mühelos und demgemäß entsprechend kostensparend an der aufgrund statischer Berechnungen unter Berücksichtigung der zu erwartenden Auflagerkräfte ohne weiteres zu erstellenden statischen Berechnung in den zumindest im wesentlichen gleich dicken Schenkel eingebracht werden.

Eine derartige Ausgestaltung ist ersichtlich nicht allein bei Beschlägen möglich, die aus Leichtmetall bzw. einer Leichtmetallegierung bestehen, sondern insbesondere auch bei Beschlägen aus Stahl od.dgl., also aus Materialien relativ hoher Festigkeit, die aufgrund ihrer Festigkeitswerte ensprechend kleiner Dimensioniereungen (bei gleichen Beanspruchungen) erfordern, wobei erfindungsgemäß insbesondere für eine Ausgestaltung aus Stahl als Befestigungselemente Stabdübel vorgesehen sind.

Für den einschlägigen Fachmann ist ohen weiteres einsichtig, daß bei einem erfindungsgemäßen Beschlag auch zwei oder mehr Schenkel vorhanden sein können.

I.ü. besteht eine weitere erfindungsgemäße Ausgestaltung darin, daß ein oberhalb eines bzw. des Schenkels angeordneter Auflagerschenkel vorhanden sein kann, der sichin entgegengesetzter Richtung zum Steg erstreckt, so daß der Beschlag mithin eine im wesentlichen Z-förmige Form aufweist und der Auflagerschenkel mithin bspw. auf einen Hauptträger aufgelagert werden kann, bspw. um einen oberkantenbündigen Anschluß des betreffenden Holzbalkens an diesen zu verwirklichen.

Weitere erfindungsgemäße Ausgestaltungen sind in den Unteransprüchen beschrieben.

Die Erfindung ist nachstehend an einem Ausführungsbeispiel unter Bezugnahme auf eine Zeichnung weiter erläutert. Es zeigt:

Fig. 1 einen Schnitt durch einen erfindungsgemäßen Beschlag, mit dem ein Dachbalken mit einem Hauptträger verbunden ist, im montierten Zustand; und

Fig. 2 die mit einem strichpunktierten Kreis II eingerahmte Einzelheit, welche u.a. die Schwächung des Schenkels enthält, in gegenüber Fig. 1 — und auch den natürlichen Abmessungen — vergrößerter Darstellung.

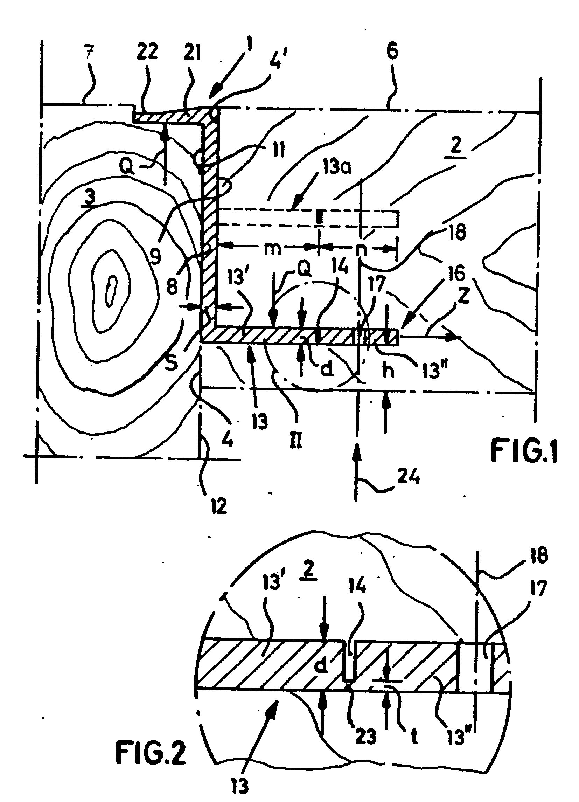

Die Zeichnung zeigt einen im ganzen mit 1 bezeichneten Beschlag zum Anschluß eines mit einer Strichlinie angedeuteten Holzbalkens 2, bei dem es sich um einen Dachbalken handelt, an einen quer zu dem Holzbalken 2 verlaufenden, ebenfalls au Holz bestehenden Hauptträger 3, der in der Zeichnung gleichfalls mit einer Strich-Linie angedeutet ist, und zwar ist der Holzbalken 2 mit seiner einen Stirnseite 4 oberkantenbündig an den Hauptträger 3 angeschlossen, wie die zueinander fluchtenden Oberseiten 6 bzw. 7 des Holzbalkens 2 bzw. des Hauptträgers 3 in Fig. 1 erkennen lassen. Dabei ist der Anschluß des Holzbalkens 2 mit der auftretenden Querkraft Q belastbar, wie weiter unten noch erläutert ist.

Der Beschlag 1 besitzt einen im montierten Zustand vertikal verlaufenden Steg konstanter Wandstärke, wobei der Holzbalken 2 mit dem ausgenommen, rükversetzten Abschnitt 4'seiner Stirnseite an der einen Anlagefläche 9 des Steges 8 anliegt, während die andere Anlagefläche 11 des Steges 8 an der einen Seitenfläche 12 des Hauptträgers 3 anliegt, wie aus Fig. 1 erkennbar ist.

Der bereits angedeutete Versatz der beiden Stirnseitenabschnitte 4 und 4' des Holzbalkens ergibt sich aus dem Umstand, daß dieser im eingebauten Zustand von der Unterseite her nicht sichtbar sein soll, so daß er im Stirkseitenabschnitt 4' entsprechend der Stärke s des Steges 8 ausgenommen ist.

Eine weitere Ausnehmung erstreckt sich senkrecht hierzu, und zwar zur Aufnahme eines rechtwinklig zum Steg 8 verlaufenden Schenkels 13 des Beschlages 1, der integral mit dem Steg 8 ausgebildet ist und bei dem dargestellten Ausführungsbeispiel wie dieser aus Stahl besteht.

Auch dieser weitere Ausnehmung des Holzbalkens 2 ist insbesondere vorgesehen, um den Beschlag 1 von unten der nicht erkennen zu können, was bei dem dargestellten Ausführungsbeispiel ersichtlich der Fall ist, da sich unterhalb des Schenkels 13 noch Holzmaterial von der Dicke h befindet.

Wie die Zeichnung erkennen läßt, ist die Dicke d des Schenkels 13 konstant, indes mit Ausnahme einer als schlitzförmiger schmaler Einschnitt ausgebildeten Schwächung 14, die einerseits mit Abstand m zur Anlagefläche 9 des Steges 8 und andererseits mit einem Abstand n zum freien Ende 16 des Steges 8 angeordnet ist, sowie mit Ausnahme von Bohrungen 17 zur Aufnahme von Befestigungsmitteln, die im vorliegenden Falle bevorzugt aus Stabdübeln bestehen und in der Zeichnung lediglich mit ihrer Längsachshe 18 angedeutet sind.

Die erfindungsgemäß vorgesehene Scwächung 14 des Steges 8 hat zur Folge, daß dieser lediglich auf seinem dem Steg 8 benachbarten, sich über die Länge m erstreckenden Abschnitt 13' in der Lage ist, Auflasten aufzunehmen, d.h. Querkräfte zu übertragen, während er auf seinem sich über die Länge n erstreckenden freien Endabschnitt 13'', in dem sich die Bohrung(en) 17 Aufnahme des (der) durch ihre Längsachse 18 angedeuteten Befestigungsmittel (= hier Stabdübel) befindet, bestimmungsgemäß lediglich in der Lage ist, eingeprägte Zugkräfte Z aufzunehmen bzw. zu übertragen.

Der Vollständigkeit halber sei noch darauf verwisen, daß der Beschlag 1 darüber hinaus noch einen Auflagerschenkel 21 aufweist, der sich — wie der Schenkel 13 — im montierten Zustand horizontal, und damit senkrecht, zum Steg 8 erstreckt, jedoch in entgegengesetzter Richtung und auf dem Hauptträger 3 — genauer gesagt, in einer Ausnehmung 22 des Hauptträgers 3 —

auf diesem aufliegt, deren Länge der Länge des Auflagerschenkels 21 und deren Tiefe der größten Dicke des Auflagerschenkels 21 entspricht, die sich an dem stegnahen Ende des Auflagerschenkels 21 befindet.

Während die Vorbereitung der Holzbalken 2, 3 für den einschlägigen Fachmann zumindest nach Kenntnis der vorstehenden Ausführungen und it einem Blick auf die beigefügte Zeichnung ohne weiteres ersichtlich sein dürfe, zumal sie grundsätzlich aus der DE—PS 31 30 445 in ganz ähnlicher Weise bekannt ist, besteht u.a. das Neue darin, daß die Ausnehmung des Holzbalkens 2 zur Aufnahme des Schenkels 13 im Hinblick auf dessen Ausgestaltung in beiden im Querschnitt konstant sein kann und demgemäß erheblich einfacher herzustellen ist, als dieses bei einem vergleichbaren Beschlag gemäß der DE—PS 31 30 445 der Fall sein kann.

Obwohl der Schenkel 13 über seine gesamte Länge (m + n) eine konstante Dicke d aufweist, demgemäß auch seinerseits bezonders einfach herzustellen ist (was mithin für den gesamten Beschlag 1 gilt, da dieser ersichtlich insgesamt eine nahezu gleichbleibende Wandstärke aufweist), und obwohl der Beschlag bzw. dessen Schenkel 13 mithin auch keiner spanabhebenden Bearbeitung oder/und entsprechend stufig ausgebildeten Werkzeuge od.dgl. bedarf, kommt es ersichtlich nicht zu den in der DE—PS 31 30 445 (s.d. insbesondere S.p. 2) erwähnten, vermeintlichen wesentlichen Nachteilen, daß nämlich beispielsweise der Auflagerdruckpunkt weiter als nötig von der Anlagefläche 9 des Steges 8 weggerückt (was unter diesen Umständen aufgrund der damit verbundenen größeren Biegemomenten belastung zu einer notwendigen Verstärkung des Schenkels 13 einschließich seiner Verbindungsstelle mit dem Steg 8 führen müßte, da die als dünner schlitzförmiger Einschnitt vorgesehene Schwächung 14 zwischen den beiden Abschnitten 13' und 13'' des Schenkels 13 dieses verhindert. Denn der verbleibende Verbindungsabschnitt 23 zwischen den beiden Schenkelabschnitten 13' und 13'', dessen Höhe t so dimensioniert ist, daß die auftretenden Zugkräfte Z im Rahmen zulässiger Beanspruchungsgrenzen übertragen werden können, wirkt zwiscen den beiden Schenkelabschnitten 13', 13'' bzgl. der auftretenden Querkräfte gleichsam als Gelenk, über welches keine Momente zu übertragen sind, so daß die auftretenden Auflagerlasten bzw. die sich hieraus ergebenden Querkräfte praktisch ausschließlich über den Schenkelabschnitt 13' abgetragen werden und der Schenkelabschnitt 13'' im wesentlichen ausschließlich einem Abtrag der auftretenden Zugkraft Z dient. Hierfür ist, wie bereits ausgeführt, der Schenkelabschnitt 13'' mit wenigstens einer (bei dem dargestellten Ausführungsbeispiel mehreren) Bohrung 17 versehen, in welche in Richtung des Pfeiles 24, also von unten her, ein Stabdübel eingetrieben wird, so daß über die auftretenden Reibungen etc. hinaus eine zusätzliche Halterung im Holzbalken 2 gewährleistet ist und die auftretenden Zugkräfte Z aufgenommen und übertragen werden können.

Verglichen mit den aus der DE—PS 31 30 445 vorbekannten Beschlägen hat der erfindungsgemäß Beschlag mithin funktionsmäßig dieselben Vorteile und darüber hinaus insbesondere in fertigungstechnischer Hinsicht weitere, oben bereits z.T. beschriebene Vorteile, während die im Rahmen eines offensichtlichen Vorurteils in der Fachwelt vermuteten Nachteile bei derartigen Beschlägen mit einem Schenkel gleichmäßiger Dicke aufgrund des erfindungsgemäßen "Tricks" der Schaffung einer Schwächung 14 tatsächlich nicht vorhanden sind bzw. hierdurch ausgeschaltet werden.

Besteht der erfindungsgemäße Beschlag — wie bei dem dargestellten Ausführungsbeispiel — nicht aus einem Leichtmetall wie beispielsweise Aluminium bzw. einer Aluminiumlegierung, so sind mit ihm nicht nur entsprechend relativ geringe Dimensionen zu verwirklichen, sondern er ist mit ihm auch ein gegenüber Alu-Beschlägen od.dgl. erheblich erhöhter Brandschutz zu realisieren, wobei insbesondere ein solcher erfindungsgemäßer Beschlag selbst für höchste Festigkeitsklassen einsetzbar und beispielsweise auch dann verwendbar ist, wenn ein schwerer Holzeimbalken mit einer entsprechenden Tragkonstruktion zu verbinden ist.

Die erfindungsgemäße Schwächung 14 muß sich nicht notwendigerweise über die gesamte quer zur Zeichnungsebene gemessene Breite des Beschlages 1 erstrecken, doch besteht hierin — u.a. schon aus fertigungstechnischen Gründen — eine bevorzugte Ausbildung.

Es sei noch darauf verwiesen, daß ein erfindungsgemäßer Beschlag 1 grundsätzlich ersichtlich auch mehr als einen Schenkel 13 aufweisen kann, also beispielsweise einen zweiten, in Fig. 1 mit gestrichelten Linien angedeuteten Schenkel 13a, der bei dem dargestellten Ausführungsbespiel in identischer Weise ausgebildet ist wie der Schenkel 13 und mit Abstand parallel oberhalb diesem verläuft, also dann ebenfalls in den Holzbalken 2 eingelassen ist, um auf diese Weise entsprechend hohe Auflasten aufnehmen und abtragen zu können, ohne eine entsprechende Wandstärkenerhöhung des Schenkels 13 vornehmen zu müssen.

Wie bereits angedeutet, kann der gesamte Beschlag 1 im wesentlichen oder auch vollständig in das Holz der Holzträger 2, 3 eingebettet und demgemäß auch schmaler als der Holzbalken 2 sein, wie dieses für den Fachmann ohne weiteres erkennbar ist.

Die Verbindung des Beschlages 1 mit dem Hauptträger 3 od.dgl. muß ersichtlich nicht notwendigerweise so erfolgen, wie dieses bei dem in der Zeichnung dargestellten Ausfürungsbeispiel der Fall ist, also mittels eines (oder mehreren) Auflagerschenkels 21, sondern es kann beispielsweise an der der Anlagefläche 9 gegenüberliegenden weiteren Anlagefläche 11 des Steges 8 eine Verzahnung, hakenförmiger Zinken od.dgl. vorhanden sein, mittels dessen der Beschlag 1 formschlüssig mit dem Hauptträger 3 bzw. einem mit dem Hauptträger 3 verbundenen, vorzugsweise aus Metall (im vorliegenden Fall also ebenfalls aus-Stahl) bestehenden Bauteil zu verbinden ist.

BEZUGSZEICHENLISTE

1 Beschlag
2 Holzbalken (= Dachbalken)
3 Hauptträger
4, 4' Stirkseite (von 2)
5 —
6 Oberseite (von 2)
7 Oberseite (von 3)
8 Steg (von 1)
9 Anlagefläche (von 8)
10 —
11 Anlagefläche (von 8)
12 Seitenfläche (von 3)
13, 13a Schenkel (von 1) 13',13''-Schenkelabschnitte
14 Schwächung
15 —
16 freies Ende (von 8)
17 Bohrungen
18 Längsachse
19 —
20 —
21 Auflagerschenkel
22 Ausnehmung (in 3)
23 Verbindungsabschnitt (zwischen 13'/13'')
24 Pfeil
25 —
26 —
27 —
28 —
29 —
30 —

**Patentansprüche**

1. Beschlag (1) zum stirnseitigen, insbesondere oberkantenbündigen, querkraftsbelastbaren Anschluß eines Holzbalkens (2), bspw. eines Dachbalkens oder eine Dachpfette, an eine quer zu dem Holzbalken (2) verlaufende — insbesondere ebenfalls aus Holz bestehende — Tragkonstruktion, bspw. einen Hauptträger (3) oder Binder, wobei ein Steg (8) des Beschlages (1) mit seiner einen Anlagefläche (9) an der Stirnseite des Holzbalkens (2) in Anlage zu bringen ist und von der Anlagefläche (9) wenigstens ein Schenkel (13, 13a) senkrecht zu der mit der Längsrichtung des Steges (8) übereinstrimmenden (Querkraft-) Kraftrichtung (Q) vorsteht, der mit dem Holzbalken (2) verbunden ist, und dessen dem Steg (8) abgekehrter freier Endabschnitt (16) durch wenigtens ein im wesentlichen senkrecht zum Schenkel (13, 13a) verlaufendes Befestigungsmittel (bei 18) mit dem Holzbalken (2) zu verbinden, jedoch derart ausgebildet ist, daß mit ihm praktisch keine Querkräfte (Q), sondern lediglich Zukräfte (Z), zu übertragen sind, wobei der Schenkel (13, 13a) mit

Abstand (m) zum Steg (8) eine Schwächung (14) aufweist, dadurch gekennzeichnet, daß die in Richtung des Steges (8) gemessene Dicke (d) des Schenkels (13, 13a) konstant und die Schwächung als relativ dünner bzw. schmaler, schlitzförmiger Einschnitt (14) ausgebildet ist.

2. Beschlag nach Anspruch 1, dadurch gekennzeichnet, daß sich der Einschnitt (14) über die gesamte Breite des Schenkels (13, 13a) erstreckt.

3. Beschlag nach Anspruch 1 oder 2, dadurch gekennzeichnet, daß sich der Einschnitt (14) von der Oberseite zur Unterseite des Schenkels (13, 13a) hin erstreckt.

4. Beschlag nach einem oder mehreren der vorhergehenden Ansprüche, gekennzeichnet durch eine Ausbildung aus Stahl.

5. Beschlag nach einem oder mehreren der vorhergehenden Ansprüche, dadurch gekennzeichnet, daß das Befestigungsmittel (bei 18) ein Stabdübel ist.

6. Beschlag nach einem oder mehreren der vorhergehenden Ansprüche, dadurch gekennzeichnet, daß ein oberhalb des Schenkels (13, 13a) angeordneter Auflagerschenkel (21) vorhanden ist, der sich in entgegengesetzter Richtung zum Schenkel (13, 13a) vom Steg (8) aus rechtwinklig nach außen erstreckt.

7. Beschlag nach Anspruch 6, dadurch gekennzeichnet, daß der Auflagerschenkel (21) keine Schwächung (14) aufweist.

8. Beschlag nach einem oder mehreren der vorhergehenden Ansprüche, dadurch gekennzeichnet, daß mindestens zwei Schenkel (13, 13a) vorhanden sind.

9. Beschlag nach Anspruch 8, dadurch gekennzeichnet, daß die Schenkel (13, 13a) gleich ausgebildet sind.

10. Beschlag nach einem oder mehreren der vorhergehenden Ansprüche, dadurch gekennzeichnet, daß er vollständig in den Holzbalken (2) und/oder die Tragkonstruktion (3) einzubetten ist.

**Revendications**

1. Ferrure (1) pour le raccordement côté frontal, en particulier au niveau du bord supérieur, avec possibilité de supporte une charge transversale, d'une poutre de bois (2), par exemple d'une poutre de comble ou d'un panne, à une construction porteuse, par exemple une poutre principale (3) ou maîtresse-poutre, s'étendant transversalement par rapport à la poutre de bois (2) — notamment constituée également en bois — une âme (8) de la ferrure (1) étant à amener, par une de ses faces de construction (9), contre la face frontale de la poutre en bois (2) et au moins une aile (13, 13a) faisant saillie de la face de construction (9) perpendiculairement à la direction de force (force transversale) (Q) correspondant à la direction longitudinale de l'âme (8), aile qui est relié à la poutre de bois (2) et dont la section d'extrémité (16) libre, détournée de l'âme (8), est à relier à la poutre de bois (2) par au moins un moyen de fixation (par 18) s'étendant en principe perpendiculairement à l'aile (13, 13a), mais qui est agencé de manière qu'avec lui, il n'y ait pas à transmettre des forces transversales (Q) mais seulement des forces de traction (Z), l'aile (13, 13a) présentant un affaiblissement (14) à une certaine distance (m) de l'âme (8), caractérisée par le fait que l'épaisseur (d) de l'aile (13, 13a), mesurée en direction de l'âme (8), est constante et l'affaiblissement est formé par une entaille (14) en forme de fente relativement mince ou étroite.

2. Ferrure selon la revendication 1, caractérisée par le fait que l'entaille (14) s'étend sur toute la largeur de l'aile (13, 13a).

3. Ferrure selon la revendication 1 ou 2, caractérié par le fait que l'entaille (14) s'étend de la face supérieure vers la face inférieure de l'aile (13, 13a).

4. Ferrure selon l'une des revendications précédentes, caractérisée par une réalisation en acier.

5. Ferrure selon l'une des revendications précédentes, caractérisée par le fait que le moyen de fixation (par 18) est une cheville en barre.

6. Ferrure selon l'une des revendications précédentes, caractérisée par le fait qu'il est prévu une aile d'appui (21) située au-dessus de l'aile (13, 13a) et qui s'étend vers l'extérieur perpendiculairement à l'âme (8) en direction opposée à l'aile (13, 13a).

7. Ferrure selon la revendication 6, caractérisée par le fait que l'aile d'appui (21) ne présente aucun affaiblissement (14).

8. Ferrure selon l'une des revendications précédentes, caractérisée par le fait qu'il est prévu au moins deux ailes (13, 13a).

9. Ferrure selon la revendication 8, caractérisée par le fait que les ailes (13, 13a) sont identiques.

10. Ferrure selon l'une des revendications précédentes, caractérisée par le fait qu'elle est à encastrer totalement dans la poutre en bois (2) et/ou la construction porteuse (3).

**Claims**

1. A fitting (1) for end-face connection, adapted to withstand transverse loading, of a timber beam (2), for example, a roof beam or a purlin, more particularly so as to be flush with the top edge of such beam, to a support structure, for example, a main girder (3) or roof framing which is also more particularly made of wood and which extends transversely to the main beam (2), an intermediate part (8) of the fitting (1) being engageable by way of one (9) of its abutment faces with the end face of the timber beam (2), at least one arm (13, 13a) so projecting from the abutment face (9) as to extend perpendicularly to the (transverse) force direction (Q) coinciding with the length of the intermediate part (8), such arm being connected to the timber beam (2), that free end part (16) of the arm which is remote from the intermediate part (8) being adapted to be connected to the timber beam (2) by at least one fastener (at 18) which extends substantially perpendicularly to the arm (13, 13a), the free end part being so devised as having to transmit merely tensile forces (Z) and substantially no transverse forces (Q), the arm (13, 13a) being formed at a distance (m) from the intermediate part (8) with a weakening, characterised in that the thickness (D) of the arm (13, 13a) as measured in the direction of the intermediate part (8) is constant and the weakening is in the form of a relatively thin or narrow slot-like incision (14).

2. A fitting according to claim 1, characterized in that the incision (14) extends over the whole width of the arm (13, 13a).

3. A fitting according to claim 1 or 2, characterised in that the incision (14) extends from the top to the bottom of the arm (13, 13a).

4. A fitting according to one or more of the previous claims, characterised by a construction of steel.

5. A fitting according to one or more of the previous claims, characterised in that the fastener (at 18) is a dowel.

6. A fitting according to one or more of the previous claims, characterised in that a support arm (21) is provided above the arm (13, 13a) and extends out at right angles from the intermediate part (8) in the opposite direction to the arm (13, 13a).

7. A fitting according to claim 6, characterised in that the suport arm (21) is devoid of weakening (14).

8. A fitting according to one or more of the previous claims, characterised in that at least two arms (13, 13a) are provided.

9. A fitting according to claim 8, characterised in that the arms (13, 13a) are identical.

10. A fitting according to one or more of the previous claims, characterised in that it is adapted to be completely embedded in the timber beam (2) and/or support structure (3).

FIG.1

FIG.2